# EUROPEAN PATENT SPECIFICATION

(11) **EP 3 370 333 B1**
(45) Date of publication and mention of the grant of the patent: **06.05.2020**
(21) Application number: 16859415.8
(22) Date of filing: 08.09.2016
(51) Int. Cl.: H02M 7/217, H02M 7/06

(54) **POWER CONVERSION DEVICE**
STROMWANDLUNGSVORRICHTUNG
DISPOSITIF DE CONVERSION DE PUISSANCE

(30) Priority: 30.10.2015 JP 2015214497
(43) Date of publication of application: 05.09.2018
(73) Proprietor: Fujitsu General Limited, Kanagawa-ken 213-8502 (JP)
(72) Inventor: SASAKI, Shigeharu, Kawasaki-shi Kanagawa 213-8502 (JP)
(74) Representative: TBK
(86) International application number: PCT/JP2016/076519
(87) International publication number: WO 2017/073178

(56) References cited:
- EP-A1- 2 693 623
- EP-A2- 2 063 523
- CN-U- 2 116 294
- JP-A- H07 198 154
- JP-A- 2005 337 563
- JP-A- 2007 202 369
- JP-A- 2010 148 259

## Description

### Technical Field

The present invention relates to a power converter with which it is possible to eliminate a step-down circuit, to use an element with low withstand voltage, and to reduce noise removing components in a case where power is supplied from a three-phase AC power supply to a power supply unit of the power converter.

### Background Art

In the related art, in a case where operation control is performed using a motor or the like as a load, a power converter such as a converter or an inverter is used. In the power converter, a power supply for driving a switching element or the like is required.

PTL 1 discloses an air conditioning apparatus including a power converter having a power supply unit which receives power supply through power supply wiring connected to a neutral line of a three-phase four-wire AC power supply and one phase among the three-phase power lines of a R-phase, an S-phase, and a T-phase.

In addition, PTL 2 discloses an electric motor control device including a power supply unit which receives power supply from any two phases among three-phase power lines of an R-phase, an S-phase, and a T-phase as a power converter.

### Citation List

### Patent Literature

[PTL 1] Japanese Patent Publication No. H07-198154
[PTL 2] Japanese Patent Publication No. H 09-285138

Document EP 2 693 623 A1 discloses a power converter applied in an air conditioner. The power converter is connected to an AC power supply by using four lines, i.e., a neutral line is used. A power supply circuit providing power supply for a SW power supply circuit for controlling an inverter and a converter is connected to one of the three-phase AC power lines and the neutral line. Moreover, a noise filter is provided, which is a normal mode filter and is intended to suppress influence of noise of the converter to the SW power supply circuit.

Document EP 2 063 523 A2 an AC/DC converter, wherein a switch mode power supply is connected to an AC power supply via a rectifier and a capacitor divider.

Document CN 2 116 294 U discloses a protecting device for preventing a phase failure of a power supply, wherein three equal capacitors are connected into star connection, and a relay is connected between a neutral point and a ground wire. When a power supply line is in the phase failure operation, an electric potential difference is formed between the neutral point and the ground wire of the star connection; therefore, the relay acts, and the purpose of phase failure protection is achieved.

### Summary of Invention

### Technical Problem

According to the disclosure in PTL 1, since the three-phase four-wire AC power supply including the neutral line is connected to the power converter of the air conditioning apparatus, noise generated in the power converter leaks from all four lines including the neutral line to an outside (power supply system). Therefore, a noise removing component such as a noise filter for the four lines is required between the power converter and the power supply system.

On the other hand, according to the disclosure in PTL 2, a power supply is obtained from any two phases among the three phases without using the neutral line. Here, the power supply unit of the electric motor control device has to convert the three-phase line voltage to a desired power supply voltage, but in general, the three-phase line voltage is 200 V or 400 V, which is a high voltage. Therefore, it is necessary to consider insulation measures for the power supply unit, the withstand voltage of elements in the power supply unit, and addition of a step-down circuit, or the like.

The invention has been made in view of the situation described above and an object of the invention is to provide a power converter with which it is possible to eliminate a step-down circuit, to use an element with low withstand voltage, and to reduce noise removing components in a case where power is supplied from a three-phase AC power supply to a power supply unit of the power converter.

### Solution to Problem

This object is solved by a power converter as defined in claim 1, and alternatively by a power converter as defined in claim 2.

In order to solve the problems described above and achieve the object, a power converter according to the invention includes: a power conversion module that converts input three-phase AC power to desired power and outputs the desired power; a drive control unit that drives an active element included in the power conversion module; a power supply unit that generates a power supply voltage for use in the drive control unit and outputs the power supply voltage to the drive control unit; three-phase AC power lines that are provided at a previous stage of the power conversion module and output three-phase AC power connected to an input side of the power conversion module to the power conversion module; two capacitors that are connected in series between one phase power line and another phase power line among the three-phase AC power lines; and power supply lines that are respectively connected between the one phase power line and the power supply unit and between the two capacitors and the power supply unit to supply power to the power supply unit.

In addition, a power converter according to the invention includes: a power conversion module that converts input three-phase AC power to desired power and outputs the desired power; a drive control unit that drives an active element included in the power conversion module; a power supply unit that generates a power supply voltage for use in the drive control unit and outputs the power supply voltage to the drive control unit; three-phase AC power lines that are provided at a previous stage of the power conversion module and output three-phase AC power connected to an input side of the power conversion module to the power conversion module; three filter capacitors that are connected by star connection between the three-phase AC power lines; and power supply lines that are respectively connected between one phase power line among the three-phase AC power lines and the power supply unit and between the filter capacitors and the power supply unit to supply power to the power supply unit.

### Advantageous Effects of Invention

According to the invention, in a case where power is supplied from the three-phase AC power supply to the power supply unit of the power converter, the interline voltage of the power supply lines is substantially half the three-phase line voltage, which makes it possible to eliminate a step-down circuit and to use an element with a low withstand voltage. Furthermore, since the neutral line of a three-phase four-wire AC power supply is not used, it is not necessary to use noise removing components for all four lines so that the number of noise removing components can be reduced.

### Brief Description of Drawings

Fig. 1 is a diagram illustrating a configuration of a power converter which is an embodiment of the invention.
Fig. 2 is a diagram illustrating a configuration of a modification example of a power converter which is an embodiment of the invention.

### Description of Embodiments

Hereinafter, embodiments of the invention will be described with reference to the accompanying drawings.

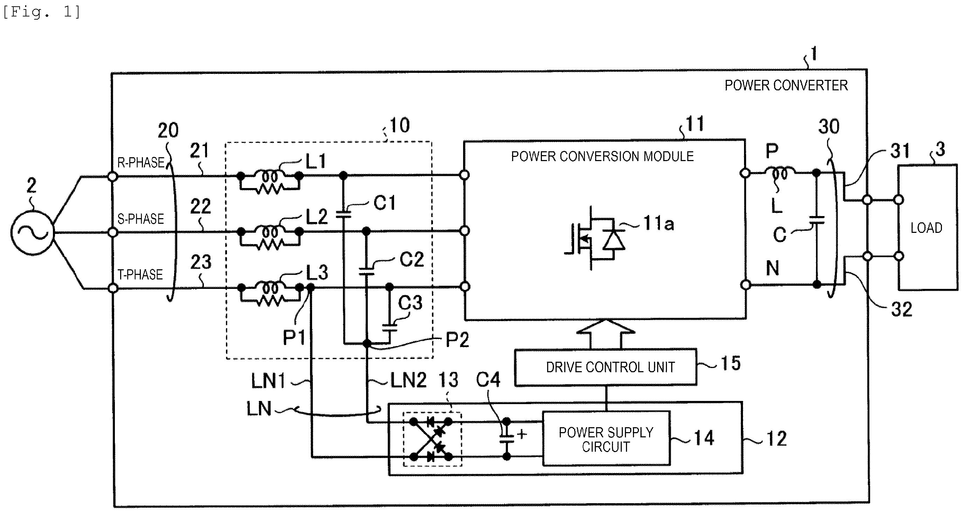

Fig. 1 is a diagram illustrating a configuration of a power converter 1 which is an embodiment of the invention. As illustrated in Fig. 1, the power converter 1 includes a power conversion module 11 and three-phase AC power lines 20 including an R-phase power line 21, an S-phase power line 22, and a T-phase power line 23. Three-phase AC power is supplied from an external three-phase AC power supply 2 to the power converter 1. The supplied power of R-phase, S-phase, and T-phase is supplied to the power conversion module 11 through the three-phase AC power lines 20.

An L-type filter 10 is provided for the three-phase AC power lines 20. The L-type filter 10 includes reactors L1, L2, and L3 that are provided for the R-phase power line 21, the S-phase power line 22, and the T-phase power line 23, respectively, and filter capacitors C1, C2, and C3 that are connected by star connection between the R-phase power line 21, the S-phase power line 22, and the T-phase power line 23. The L-type filter 10 is a low-pass filter and removes normal mode noise.

The power conversion module 11 controls driving of an active element 11a such as a switching element to convert input three-phase AC power to desired power and output the desired power. In Fig. 1, the three-phase AC power is converted to DC power which is generated between P and N. In Fig. 1, although the power conversion module 11 functions as a converter, it may function as an AC-to-AC converter that converts the three-phase AC power to two-phase or three-phase AC power. In addition, the power conversion module 11 may also include a converter and an inverter. Furthermore, the power conversion module 11 may be a matrix converter.

The DC power between P and N output from the power conversion module 11 is supplied to an external load 3 such as a DC motor through output power lines 30 including a P power line 31 and an N power line 32. Moreover, a reactor L is provided for the P power line 31. In addition, a capacitor C is provided between the P power line 31 and the N power line 32. The reactor L and the capacitor C function as a low-pass filter.

A drive control unit 15 controls driving of the active element 11a included in the power conversion module 11. A power supply unit 12 generates various control voltages necessary for the drive control of the drive control unit 15 and supplies the generated various control voltages to the drive control unit 15.

A power supply line LN1 is wired between a point P1 on the T-phase power line 23 and the power supply unit 12. Alternatively, the point P1 may be on the R-phase power line 21 or on the S-phase power line 22. A power supply line LN2 is wired between the power supply unit 12 and a middle point P2 between the filter capacitors C1, C2, and C3 that are connected by star connection. The power supply lines LN1 and LN2 are power supply lines LN that supply, to the power supply unit 12, branch power obtained by branching a part of the power from the three-phase AC power lines 20.

Since the power supplied to the power supply unit 12 through the power supply lines LN is of an alternating current, the power is rectified by a full-wave rectifier circuit 13, smoothed by a smoothing capacitor C4, and input into a power supply circuit 14 as a DC voltage. The power supply circuit 14 converts the input DC voltage to various control voltages necessary for the drive control of the drive control unit 15 and supplies the various control voltages to the drive control unit 15. The power supply circuit 14 is realized by, for example, a switching regulator.

Here, the voltage between the middle point P2 and each phase is 1/√(3) of the interline voltage of the three-phase AC power lines 20. Therefore, the interline voltage of the power supply lines LN is 1/√(3) of the interline voltage of the three-phase AC power lines 20. For example, in a case where the interline voltage of the three-phase AC power lines 20 is substantially 400 V, the interline voltage of the power supply lines LN is substantially 230 V. Therefore, the withstand voltage of an element in the power supply unit 12 can be reduced. In addition, it is not necessary to take excessive insulation measures or provide a step-down circuit in the power supply unit 12. As a result, the power supply unit 12 can be reduced in size and cost.

In addition, the middle point P2 is provided between the filter capacitors that are connected by star connection, which form the L-type filter 10 of an existing type. Thus, similarly to the neutral line of a three-phase four-wire AC power supply, a voltage of substantially 1/√(3) of the interline voltage of the three-phase AC power lines 20 can be obtained. Furthermore, since no neutral line is used, a configuration for noise suppression between the three-phase AC power supply 2 and the power converter 1 is not necessary for a neutral line. Therefore, a noise removing component is not necessary for a neutral line. Furthermore, since the middle point P2 is obtained by using the L-type filter 10 of an existing type, it is not necessary to add any special configuration, so that an increase in the number of components can be avoided.

Verification by simulation was conducted to confirm that the filter function is not impaired in a case where the middle point of the filter capacitors that are connected by star connected, which form the L-type filter 10 of an existing type, is used as the middle point P2. When C1 to C3 were 10 µF and the power used in the power supply unit 12 (the power obtained from the T-phase) was 31.1 W, the voltage (effective value) of the capacitor C3 was 226.4 V. Since the voltage (actual value) was 230 V when the power obtained from the T-phase was zero, it was found that the voltage of the capacitor C3 dropped by approximately 4 V and the function of C3 as the filter was not impaired.

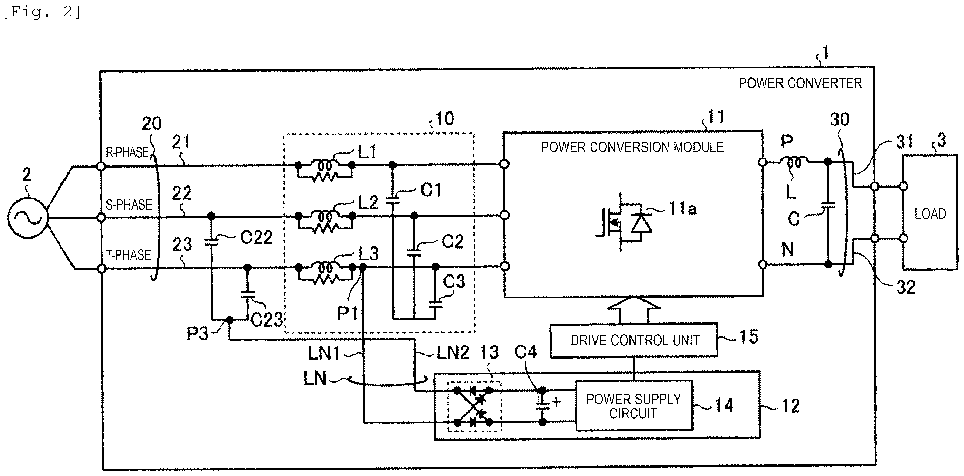

Moreover, although the middle point P2 mentioned above is the middle point between the filter capacitors that are connected by star connection, which form the L-type filter 10 of an existing type, the middle point P2 is not limited thereto, and as illustrated in Fig. 2, a middle point P3 may be formed by separately providing capacitors C22 and C23. In Fig. 2, similar to Fig. 1, a point P1 is provided on a T-phase power line 23, the two capacitors C22 and C23 that are connected in series are newly connected to each other between an S-phase power line 22 and a T-phase power line 23, and the middle point P3 is a middle point between the capacitor C22 and the capacitor C23. The voltage of the middle point P3 is half of the line voltage between the S-phase power line 22 and the T-phase power line 23. Moreover, the capacitors C22 and C23 may be capable of dividing the interline voltage of the three-phase AC power lines 20 into two parts, and in a case where the point P1 is provided in the T-phase power line 23, the capacitors C22 and C23 are provided between the T-phase power line 23 and the S-phase power line 22 or between the T-phase power line 23 and the R-phase power line 21.

Moreover, it has been confirmed that even if power necessary for the power supply unit 12 is supplied from the positions of the point P1 and the middle point P2 or the positions of the point P1 and the middle point P3, voltage waveforms of the filter capacitors C1, C2, and C3 are not disturbed and the filter operation function is not impaired.

### Reference Signs List

- 1:: power converter
- 2:: three-phase AC power supply
- 3:: load
- 10:: L-type filter
- 11:: power conversion module
- 11a:: active element
- 12:: power supply unit
- 13:: full-wave rectifier circuit
- 14:: power supply circuit
- 15:: drive control unit
- 20:: three-phase AC power line
- 21:: R-phase power line
- 22:: S-phase power line
- 23:: T-phase power line
- 30:: output power line
- 31:: P power line
- 32:: N power line
- C, C22, C23:: capacitor
- C1:: filter capacitor
- C4:: smoothing capacitor
- L, L1 to L3:: reactor
- LN, LN1, LN2:: power supply line
- P1:: point
- P2, P3:: middle point

## Claims

1. A power converter (**1**) comprising:
a power conversion module (**11**) configured to convert input three-phase AC power to desired power and to output the desired power;
a drive control unit (**15**) configured to drive an active element (**11a**) included in the power conversion module (**11**);
a power supply unit (**12**) that generates a power supply voltage for the drive control unit (**15**) and outputs the power supply voltage to the drive control unit (**15**); and
three-phase AC power lines (**20**) that are provided at a previous stage (10) of the power conversion module (**11**) and output a three-phase AC power connected to an input side of the power conversion module (**11**) to the power conversion module **(11);**
**characterized in that**
the three-phase AC power lines (**20**) do not comprise a neutral line, and the power converter (**1**) further comprises:
two capacitors **(C22), (C23)** that are connected in series between a phase power line (**21**), (**22**), (**23**) and another phase power line (**21**), (**22**), (**23**) among the three-phase AC power lines (**20**); and
power supply lines (**LN**) that are respectively connected between the phase power line (**21**), (**22**), (**23**) and the power supply unit (**12**), and between the two capacitors (**C22**), (**C23**) and the power supply unit (**12**) to supply power to the power supply unit (**12**).

2. A power converter (**1**) comprising:
a power conversion module (**11**) configured to convert input three-phase AC power to desired power and to output the desired power;
a drive control unit (**15**) configured to drive an active element (**11a**) included in the power conversion module (**11**);
a power supply unit (**12**) configured to generate a power supply voltage for the drive control unit (**15**) and configured to output the power supply voltage to the drive control unit (**15**);
three-phase AC power lines (**20**) that are provided at a previous stage (**10**) of the power conversion module (**11**) and output a three-phase AC power connected to an input side of the power conversion module (**11**) to the power conversion module (**11**);
**characterized in that**
the three-phase AC power lines (**20**) do not comprise a neutral line, and the power converter (**1**) further comprises:
three filter capacitors (**C1**), (**C2**), (**C3**) that are connected in star connection with the three-phase AC power lines (**20**); and
power supply lines (**LN**) that are respectively connected between one phase power line (**21**), (**22**), (**23**) among the three-phase AC power lines (**20**) and the power supply unit (**12**), and between the filter capacitors (**C1**), (**C2**), (**C3**) and the power supply unit (**12**), to supply power to the power supply unit (**12**).

## Patentansprüche

1. Leistungswandler (**1**) mit
einem Leistungsumwandlungsmodul (**11**), das konfiguriert ist, eine eingegebene Drei-Phasen-Wechselstromleistung in eine gewünschte Leistung umzuwandeln und die gewünschte Leistung auszugeben,
einer Antriebssteuerungseinheit (**15**), die konfiguriert ist, ein in dem Leistungsumwandlungsmodul (**11**) enthaltendes aktives Element (**11a**) anzutreiben,
einer Leistungszufuhreinheit (**12**), die eine Leistungszufuhrspannung für die Antriebssteuerungseinheit (**15**) erzeugt und die Leistungszufuhrspannung zu der Antriebssteuerungseinheit (**15**) ausgibt, und
Drei-Phasen-Wechselstromleistungsleitungen (**20**), die an einer vorhergehenden Stufe (**10**) des Leistungsumwandlungsmoduls (**11**) vorgesehen sind und eine Drei-Phasen-Wechselstromleistung, die an einer Eingangsseite des Leistungsumwandlungsmoduls (**11**) angeschlossen ist, zu dem Leistungsumwandlungsmodul (**11**) ausgibt,
**dadurch gekennzeichnet, dass**
die Drei-Phasen-Wechselstromleistungsleitungen (**20**) keine Neutralleitung aufweisen, und der Leistungswandler (**1**) weiterhin aufweist:
zwei Kondensatoren **(C22), (C23),** die in Reihe zwischen einer Phasenleistungsleitung (**21**), (**22**), (**23**) und einer anderen Phasenleitung (**21**), (**22**), (**23**) unter den Drei-Phasen-Wechselstromleistungsleitungen (**20**) geschaltet sind, und
Leistungszufuhrleitungen (**LN**), die jeweils zwischen der Phasenleistungsleitung (**21**), (**22**), (**23**) und der Leistungszufuhreinheit (**12**) sowie zwischen den zwei Kondensatoren (**C22**), (**C23**) und der Leistungszufuhreinheit (**12**) geschaltet sind, um der Leistungszufuhreinheit (**12**) Leistung zuzuführen.

2. Leistungswandler (**1**) mit
einem Leistungsumwandlungsmodul (**11**), das konfiguriert ist, eine eingegebene Drei-Phasen-Wechselstromleistung in eine gewünschte Leistung umzuwandeln und die gewünschte Leistung auszugeben,
einer Antriebssteuerungseinheit (**15**), die konfiguriert ist, ein in dem Leistungsumwandlungsmodul (**11**) enthaltendes aktives Element (**11a**) anzutreiben,
einer Leistungszufuhreinheit (**12**), die eine Leistungszufuhrspannung für die Antriebssteuerungseinheit (**15**) erzeugt und die Leistungszufuhrspannung zu der Antriebssteuerungseinheit (**15**) ausgibt, und
Drei-Phasen-Wechselstromleistungsleitungen (**20**), die an einer vorhergehenden Stufe (**10**) des Leistungsumwandlungsmoduls (**11**) vorgesehen sind und eine Drei-Phasen-Wechselstromleistung, die an einer Eingangsseite des Leistungsumwandlungsmoduls (**11**) angeschlossen ist, zu dem Leistungsumwandlungsmodul (**11**) ausgibt,
**dadurch gekennzeichnet, dass**
die Drei-Phasen-Wechselstromleistungsleitungen (**20**) keine Neutralleitung aufweisen, und der Leistungswandler (**1**) weiterhin aufweist:
drei Filterkondensatoren (**C1**), (**C2**), (**C3**), die in einer Sternverbindung mit den Drei-Phasen-Wechselstromleistungsleitungen (**20**) verbunden sind, und
Leistungszufuhrleitungen (**LN**), die jeweils zwischen einer Phasenleistungsleitung (**21**), (**22**), (**23**) unter den Drei-Phasen-Wechselstromleistungsleitungen (**20**) und der Leistungszufuhreinheit (**12**) sowie zwischen den zwei Filterkondensatoren (**C1**), (**C2**), (**C3**) und der Leistungszufuhreinheit (**12**) geschaltet sind, um der Leistungszufuhreinheit (**12**) Leistung zuzuführen.

## Revendications

1. Convertisseur de puissance (1) comprenant :
un module de conversion de puissance (11) configuré pour convertir une puissance en courant alternatif, CA, triphasé d'entrée en une puissance souhaitée et pour délivrer en sortie la puissance souhaitée ;
une unité de commande d'attaque (15) configurée pour attaquer un élément actif (11a) inclus dans le module de conversion de puissance (11) ;
une unité d'alimentation de puissance (12) qui génère une tension d'alimentation de puissance pour l'unité de commande d'attaque (15) et délivre en sortie la tension d'alimentation de puissance à l'unité de commande d'attaque (15) ; et
des lignes de puissance en CA triphasé (20) qui sont fournies au niveau d'un étage précédent (10) du module de conversion de puissance (11) et délivrent en sortie une puissance en CA triphasé connectée sur un côté d'entrée du module de conversion de puissance (11) vers le module de conversion de puissance (11) ;
**caractérisé en ce que**
les lignes de puissance en CA triphasé (20) ne comprennent pas de ligne neutre, et le convertisseur de puissance (1) comprend en outre :
deux condensateurs (C22), (C23) qui sont connectés en série entre une ligne de puissance de phase (21), (22), (23) et une autre ligne de puissance de phase (21), (22), (23) parmi les lignes de puissance en CA triphasé (20) ; et
des lignes d'alimentation de puissance (LN) qui sont respectivement connectées entre la ligne de puissance de phase (21), (22), (23) et l'unité d'alimentation de puissance (12), et entre les deux condensateurs (C22), (C23) et l'unité d'alimentation de puissance (12) pour alimenter en puissance l'unité d'alimentation de puissance (12).

2. Convertisseur de puissance (1) comprenant :
un module de conversion de puissance (11) configuré pour convertir une puissance en courant alternatif, CA, triphasé d'entrée en une puissance souhaitée et pour délivrer en sortie la puissance souhaitée ;
une unité de commande d'attaque (15) configurée pour attaquer un élément actif (11a) inclus dans le module de conversion de puissance (11) ;
une unité d'alimentation de puissance (12) configurée pour générer une tension d'alimentation de puissance pour l'unité de commande d'attaque (15) et configurée pour délivrer en sortie la tension d'alimentation de puissance à l'unité de commande d'attaque (15) ;
des lignes de puissance en CA triphasé (20) qui sont fournies au niveau d'un étage précédent (10) du module de conversion de puissance (11) et délivrent en sortie une puissance en CA triphasé connectée sur un côté d'entrée du module de conversion de puissance (11) vers le module de conversion de puissance (11) ;
**caractérisé en ce que**
les lignes de puissance en CA triphasé (20) ne comprennent pas de ligne neutre, et le convertisseur de puissance (1) comprend en outre :
trois condensateurs de filtrage (C1), (C2), (C3) qui sont connectés en connexion en étoile avec les lignes de puissance en CA triphasé (20) ; et
des lignes d'alimentation de puissance (LN) qui sont respectivement connectées entre une ligne de puissance de phase (21), (22), (23) parmi les lignes de puissance en CA triphasé (20) et l'unité d'alimentation de puissance (12), et entre les condensateurs de filtrage (C1), (C2), (C3) et l'unité d'alimentation de puissance (12), pour alimenter en puissance l'unité d'alimentation de puissance (12).
